# EUROPEAN PATENT APPLICATION

(11) **EP 4 336 128 A1**
(43) Date of publication of application: **13.03.2024**
(21) Application number: 22194125.5
(22) Date of filing: 06.09.2022
(51) Int. Cl.: F25B 45/00, C09K 5/04, F25B 43/00, F25B 43/02

(54) **METHOD FOR MANUFACTURING HEAT SOURCE UNIT AND METHOD FOR MANUFACTURING REFRIGERATION CYCLE APPARATUS**

(71) Applicant: Daikin Europe N.V., 8400 Oostende (BE)
(72) Inventor: Yamaguchi, Takahiro, 8400 Oostende (BE); Yanagi, Yuichi, 8400 Oostende (BE)
(74) Representative: Hoffmann Eitle

(57) **Abstract**

A method for manufacturing a refrigeration cycle apparatus (1) is a method for manufacturing a refrigeration cycle apparatus including a heat source unit (2), utilization units (3a and 3b), and connection pipe (4, 5). The connection pipe (4, 5) connect the heat source unit (2) and the utilization units (3a and 3b). A method for manufacturing a refrigeration cycle apparatus (101) includes a generating step (S40) and a sealing step (S50). The generating step (S40) connects the heat source unit (2) in which a refrigerant including R1234yf has been sealed to the connection pipe (4, 5) connected to the utilization units (3a and 3b) and generates a refrigerant circuit (10). The sealing step (S50) fills the refrigerant circuit (10) with R32 recovered and recycled from an existing facility and seals a mixed refrigerant including at least R32 and R1234yf.

## Description

### TECHNICAL FIELD

The present invention relates to a method for manufacturing a heat source unit and a method for manufacturing a refrigeration cycle apparatus.

### BACKGROUND ART

WO2020/003509 discloses a recycling system that recycles a refrigerant by removing at least oil from the recovered refrigerant.

### SUMMARY OF THE INVENTION

### <Technical Problem>

However, the recycled refrigerant is not sufficiently developed.

### <Solution to Problem>

A method for manufacturing a heat source unit according to a first aspect includes a first step and a second step. The heat source unit constitutes a refrigeration cycle apparatus. The first step mixes R32 recovered and recycled from an existing facility and R1234yf and generates a mixed refrigerant including at least R32 and R1234yf. The second step fills the heat source unit with the mixed refrigerant.

According to the method for manufacturing a heat source unit according to the first aspect, since the first step mixes recycled R32 and R1234yf having a low global-warming potential (GWP), a mixed refrigerant having a low GWP can be generated. Therefore, by performing the second step, the heat source unit can be filled with the mixed refrigerant having a low GWP. Accordingly, the recycled refrigerant can be used in a heat source unit contributing to reduction of global warming.

According to a method for manufacturing a heat source unit according to a second aspect, in the method for manufacturing a heat source unit according to the first aspect, the first step includes a recycling step and a mixing step. The recycling step recycles R32 recovered from the existing facility. The mixing step mixes at least recycled R32 and R1234yf. The recycling step includes a step of reducing at least one of water, acid, or oil included in recovered R32.

In the method for manufacturing a heat source unit according to the second aspect, since R32 in which at least one of water, acid, or oil has been reduced is recycled, the quality of the mixed refrigerant generated by mixing R32 with R1234yf can be improved.

According to a method for manufacturing a heat source unit according to a third aspect, in the method for manufacturing a heat source unit according to the second aspect, the mixing step includes a step of further mixing an acid scavenger.

In the method for manufacturing a heat source unit according to the third aspect, in the mixing step, even if R1234yf is decomposed to generate an acid, the acid scavenger can trap the acid. Therefore, an increase in the acid concentration can be suppressed.

According to a method for manufacturing a heat source unit according to a fourth aspect, in the method for manufacturing a heat source unit according to the second or third aspect, the first step further includes an examining step of examining a composition of the mixed refrigerant generated in the mixing step.

In the method for manufacturing a heat source unit according to the fourth aspect, the examining step can examine whether or not the refrigerant is a mixed refrigerant having an appropriate composition. Therefore, the heat source unit can be filled with the mixed refrigerant having the appropriate composition.

According to a method for manufacturing a heat source unit according to a fifth aspect, in the method for manufacturing a heat source unit according to any one of the first to fourth aspects, in the first step, R1234yf is included in an amount of 65 mass% or more.

In the method for manufacturing a heat source unit according to the fifth aspect, a mixed refrigerant having a lower GWP can be generated in the first step. Therefore, in the second step, since the heat source unit can be filled with a mixed refrigerant having a low GWP, it is possible to contribute more to reduction in global warming.

According to a method for manufacturing a heat source unit according to a sixth aspect, in the method for manufacturing a heat source unit according to the fifth aspect, in the first step, R454C, R455A, or R454B is generated as the mixed refrigerant.

In the method for manufacturing a heat source unit according to the sixth aspect, the heat source unit can be filled with a mixed refrigerant having a very low GWP. Therefore, it is possible to realize a heat source unit that contributes to reduction in global warming by using recycled R32.

A method for manufacturing a refrigeration cycle apparatus according to a seventh aspect is a method for manufacturing a refrigeration cycle apparatus including a heat source unit, a utilization unit, and a connection pipe, the method including a third step and a fourth step. The heat source unit is manufactured by the method for manufacturing a heat source unit according to any one of the first to sixth aspects. The connection pipe connects the heat source unit and the utilization unit. The first step includes a recovering step of recovering a refrigerant from an existing refrigeration cycle apparatus. The third step detaches a first heat source unit constituting the existing refrigeration cycle apparatus from the connection pipe. The fourth step connects a second heat source unit manufactured by the method for manufacturing a heat source unit according to any one of the first to sixth aspects to the connection pipe.

In the method for manufacturing a refrigeration cycle apparatus according to the seventh aspect, the refrigerant is recovered from the existing refrigeration cycle apparatus, and the existing first heat source unit is detached from the existing connection pipe and replaced with the second heat source unit filled with the mixed refrigerant including recycled R32. Therefore, it is possible to manufacture the refrigeration cycle apparatus including the heat source unit contributing to reduction in global warming by using the recycled refrigerant.

According to a method for manufacturing a refrigeration cycle apparatus according to an eighth aspect, in the method for manufacturing a refrigeration cycle apparatus according to the seventh aspect, a fifth step of washing at least one of oil or acid adhering to the connection pipe of the existing refrigeration cycle apparatus, the fifth step being performed prior to the fourth step, is further included.

In the method for manufacturing a refrigeration cycle apparatus according to the eighth aspect, the oil and the acid adhering to the connection pipe can be reduced by the fifth step. Therefore, when the second heat source unit is connected and the mixed refrigerant is used as a working refrigerant, mixing of impurities in the mixed refrigerant can be suppressed.

According to a method for manufacturing a refrigeration cycle apparatus according to a ninth aspect, in the method for manufacturing a refrigeration cycle apparatus according to the seventh or eighth aspect, the recovering step recovers a working refrigerant from the existing refrigeration cycle apparatus using R410A or R32 as the working refrigerant. The fourth step connects the second heat source unit in which R454B has been sealed to the connection pipe.

In the method for manufacturing a refrigeration cycle apparatus according to the ninth aspect, a mixed refrigerant having a GWP lower than that of an existing working refrigerant can be used. Therefore, it is possible to manufacture a refrigeration cycle apparatus including a heat source unit that contributes to reduction in global warming.

According to a method for manufacturing a refrigeration cycle apparatus according to a tenth aspect, in the method for manufacturing a refrigeration cycle apparatus according to the eighth aspect, the recovering step recovers the working refrigerant from the existing refrigeration cycle apparatus using R22, R404A, or R407C as a working refrigerant. The fourth step connects the second heat source unit in which R454C or R455A has been sealed to the connection pipe.

In the method for manufacturing a refrigeration cycle apparatus according to the tenth aspect, a mixed refrigerant having a GWP lower than that of the existing working refrigerant can be used. Therefore, it is possible to manufacture a refrigeration cycle apparatus including a heat source unit that contributes to reduction in global warming.

A method for manufacturing a refrigeration cycle apparatus according to an eleventh aspect is a method for manufacturing a refrigeration cycle apparatus, the method including a generating step (a step of generating) and a sealing step (a step of sealing). The refrigeration cycle apparatus includes a heat source unit, a utilization unit, and a connection pipe connecting the heat source unit and the utilization unit. The generating step generates a refrigerant circuit by connecting the heat source unit in which the refrigerant including R1234yf has been sealed to the connection pipe connected to the utilization unit. The sealing step seals a mixed refrigerant including at least R32 and R1234yf by filling the refrigerant circuit with R32 recovered and recycled from an existing facility.

According to the method for manufacturing a refrigeration cycle apparatus according to the eleventh aspect, the refrigerant circuit can mix the refrigerant including R1234yf sealed in the heat source unit and recycled R32 to generate a mixed refrigerant having a low GWP. Therefore, the recycled refrigerant can be used in a refrigeration cycle apparatus that contributes to reduction in global warming.

According to a method for manufacturing a refrigeration cycle apparatus according to a twelfth aspect, in the method for manufacturing a refrigeration cycle apparatus according to the eleventh aspect, the generating step uses a heat source unit in which an R1234yf single refrigerant has been sealed.

The method for manufacturing a refrigeration cycle apparatus according to the twelfth aspect can manufacture the refrigeration cycle apparatus including the refrigerant circuit in which the mixed refrigerant having the low GWP such as R454C or R454B has been sealed by mixing R1234yf of the third heat source unit with recycled R32.

According to a method for manufacturing a refrigeration cycle apparatus according to a thirteenth aspect, in the method for manufacturing a refrigeration cycle apparatus according to the twelfth aspect, the generating step uses a heat source unit in which a refrigerant consisting of R1234yf and carbon dioxide has been sealed.

The method for manufacturing a refrigeration cycle apparatus according to the thirteenth aspect can manufacture the refrigeration cycle apparatus including the refrigerant circuit in which the mixed refrigerant having the low GWP such as R455A has been sealed by mixing R1234yf and carbon dioxide of the third heat source unit with recycled R32.

### BRIEF DESCRIPTION OF THE DRAWINGS

FIG. 1 is a schematic configuration diagram of a refrigeration cycle apparatus according to each of first and second embodiments of the present disclosure;
FIG. 2 is a flowchart illustrating a method for manufacturing the refrigeration cycle apparatus according to the first embodiment;
FIG. 3 is a schematic configuration diagram of an existing refrigeration cycle apparatus according to the first embodiment;
FIG. 4 is a schematic diagram illustrating the method for manufacturing the refrigeration cycle apparatus according to the first embodiment;
FIG. 5 is a block diagram of a recycling device according to each of the first and second embodiments;
FIG. 6 is a flowchart illustrating a method for manufacturing a heat source unit according to the second embodiment; and
FIG. 7 is a flowchart illustrating a method for manufacturing the refrigeration cycle apparatus according to the second embodiment.

### DESCRIPTION OF EMBODIMENTS

Hereinafter, a method for manufacturing a heat source device and a method for manufacturing a refrigeration cycle apparatus according to the present disclosure will be described. In the present specification, a "refrigerant" refers to a substance having refrigerant components. Specifically, the "refrigerant" includes at least a compound having a refrigerant number (ASHRAE number) starting with R, which represents a type of refrigerant defined in ISO817 (International Organization for Standardization), and further includes a substance having characteristics as an equal refrigerant even if no refrigerant number is given yet.

In the present specification, "consist of' may or may not include impurities. Specifically, "consist of' may include impurities of 1 mass% or less.

### (1) First embodiment

### (1-1) Refrigeration cycle apparatus

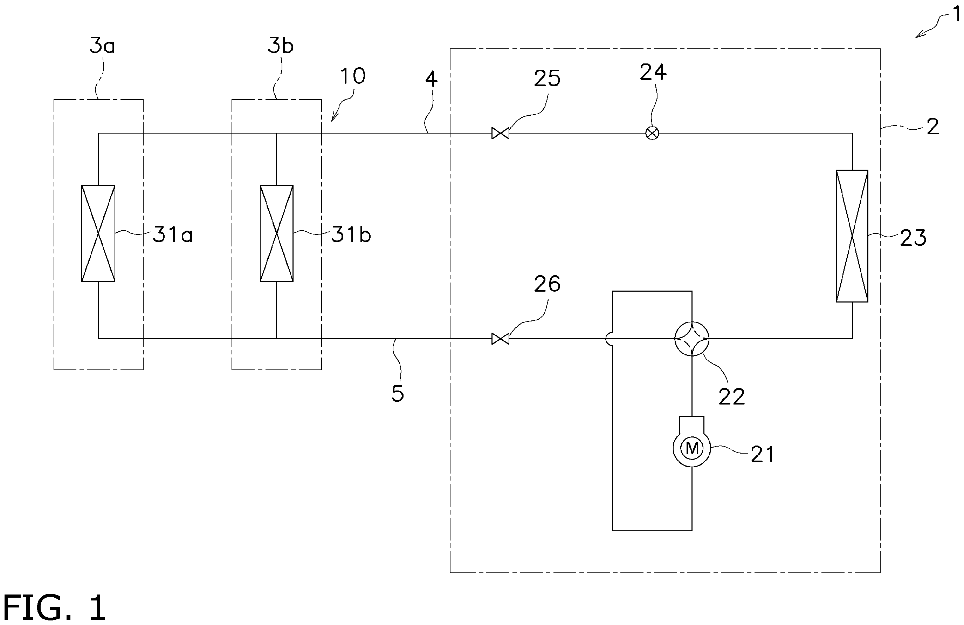

A refrigeration cycle apparatus 1 manufactured by a method for manufacturing a refrigeration cycle apparatus according to a first embodiment of the present disclosure will be described with reference to FIG. 1. The refrigeration cycle apparatus 1 illustrated in FIG. 1 is an air conditioner that performs air conditioning inside a building or the like by using a vapor compression refrigeration cycle. Note that the type of the refrigeration cycle apparatus 1 is not limited to the air conditioner, and may be, in some embodiments, a hot water supply apparatus, a floor heating apparatus, a refrigerating apparatus, or the like.

The refrigeration cycle apparatus 1 mainly includes a heat source unit 2, a plurality of (here, two) utilization units 3a and 3b connected in parallel, and a liquid connection pipe 4 and a gas connection pipe 5 that connect the heat source unit 2 and the utilization units 3a and 3b. A vapor compression refrigerant circuit 10 of the refrigeration cycle apparatus 1 is constituted by connecting the heat source unit 2 and the plurality of utilization units 3a and 3b via the liquid connection pipe 4 and the gas connection pipe 5.

In the refrigerant circuit 10, a refrigerant including at least recycled R32 and R1234yf is sealed. In the refrigerant circuit 10 of the present embodiment, a refrigerant consisting of recycled R32 and R1234yf is sealed.

Note that at least a refrigerant is sealed in the refrigerant circuit 10, and a refrigerating machine oil may be further sealed in the refrigerant circuit 10. The refrigerating machine oil includes an additive.

### (1-1-2) Heat source unit

The heat source unit 2 is installed outside a building or the like. As described above, the heat source unit 2 is connected to the utilization units 3a and 3b via the liquid connection pipe 4 and the gas connection pipe 5, and constitutes a part of the refrigerant circuit 10.

The heat source unit 2 mainly has a compressor 21, a four-way switching valve 22, an outdoor heat exchanger 23, and an expansion valve 24.

The compressor 21 is a device that compresses a low-pressure refrigerant in a refrigeration cycle to a high pressure.

The four-way switching valve 22 is a valve that switches a direction of a refrigerant flow at a time of switching between a cooling operation and a heating operation. During the cooling operation, the four-way switching valve 22 connects the discharge side of the compressor 21 and the gas side of the outdoor heat exchanger 23, and connects the gas side of each of indoor heat exchangers 31a and 31b (described later) and the suction side of the compressor 21 via the gas connection pipe 5 (see a solid line of the four-way switching valve 22 in FIG. 1). Further, during the heating operation, the four-way switching valve 22 connects the discharge side of the compressor 21 and the gas side of each of the indoor heat exchangers 31a and 31b via the gas connection pipe 5, and connects the gas side of the outdoor heat exchanger 23 and the suction side of the compressor 21 (see a broken line of the four-way switching valve 22 in FIG. 1).

The outdoor heat exchanger 23 is a heat exchanger that functions as a radiator for the refrigerant during the cooling operation, and functions as an evaporator for the refrigerant during the heating operation. The liquid side of the outdoor heat exchanger 23 is connected to the expansion valve 24, and the gas side of the outdoor heat exchanger 23 is connected to the four-way switching valve 22.

The expansion valve 24 is an expansion mechanism capable of decompressing the high-pressure liquid refrigerant that has radiated heat in the outdoor heat exchanger 23 during the cooling operation before sending the high-pressure liquid refrigerant to the indoor heat exchangers 31a and 31b, and capable of decompressing the high-pressure liquid refrigerant that has radiated heat in the indoor heat exchangers 31a and 31b during the heating operation before sending the high-pressure liquid refrigerant to the outdoor heat exchanger 23.

A liquid shutoff valve 25 is provided at a connection portion between the heat source unit 2 and the liquid connection pipe 4. A gas shutoff valve 26 is provided at a connection portion between the heat source unit 2 and the gas connection pipe 5. The liquid shutoff valve 25 and the gas shutoff valve 26 are valves that are manually opened and closed.

### (1-1-3) Utilization unit

The utilization units 3a and 3b are installed inside a building or the like. As described above, the utilization units 3a and 3b are connected to the heat source unit 2 via the liquid connection pipe 4 and the gas connection pipe 5, and constitute a part of the refrigerant circuit 10.

Note that since the utilization unit 3a and the utilization unit 3b have similar configurations, only the configuration of the utilization unit 3a will be described here. The description of the configuration of the utilization unit 3b is omitted, and instead of the subscript "a" indicating each part of the utilization unit 3a, the subscript "b" is added.

The utilization unit 3a mainly includes the indoor heat exchanger 31a. The indoor heat exchanger 31a is a heat exchanger that functions as the evaporator for the refrigerant during the cooling operation, and functions as the radiator for the refrigerant during the heating operation. The liquid side of the indoor heat exchanger 31a is connected to the liquid connection pipe 4 and the gas side of the indoor heat exchanger 31a is connected to the gas connection pipe 5.

### (1-2) Method for manufacturing refrigeration cycle apparatus

A method for manufacturing the refrigeration cycle apparatus 1 illustrated in FIG. 1, which includes the heat source unit 2, the utilization units 3a and 3b, and the connection pipes 4 and 5, will be described with reference to FIGS. 1 to 5.

Note that the method for manufacturing the refrigeration cycle apparatus 1 according to the present embodiment is performed, for example, when an existing refrigeration cycle apparatus is updated to a refrigeration cycle apparatus using a mixed refrigerant including recycled R32 and R1234yf.

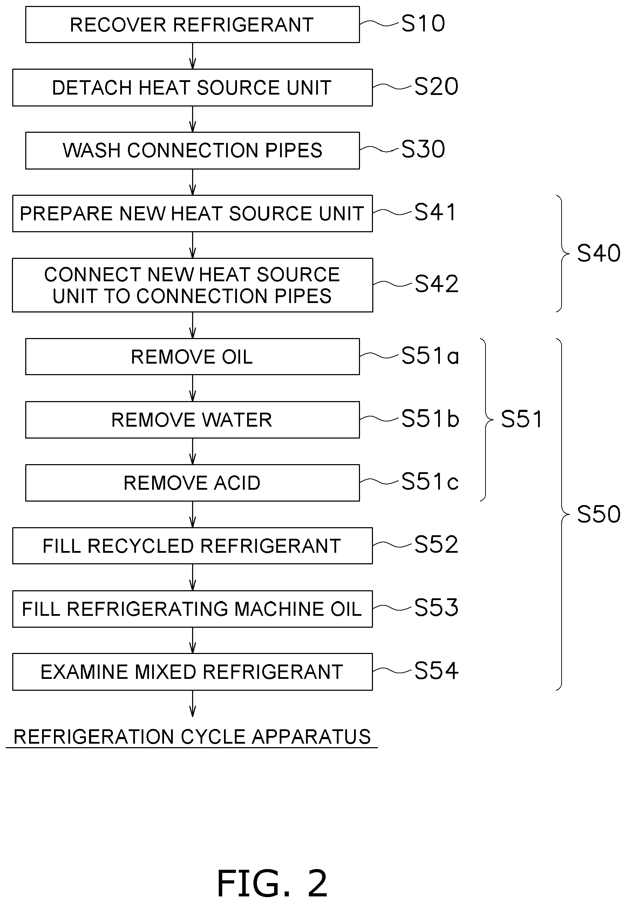

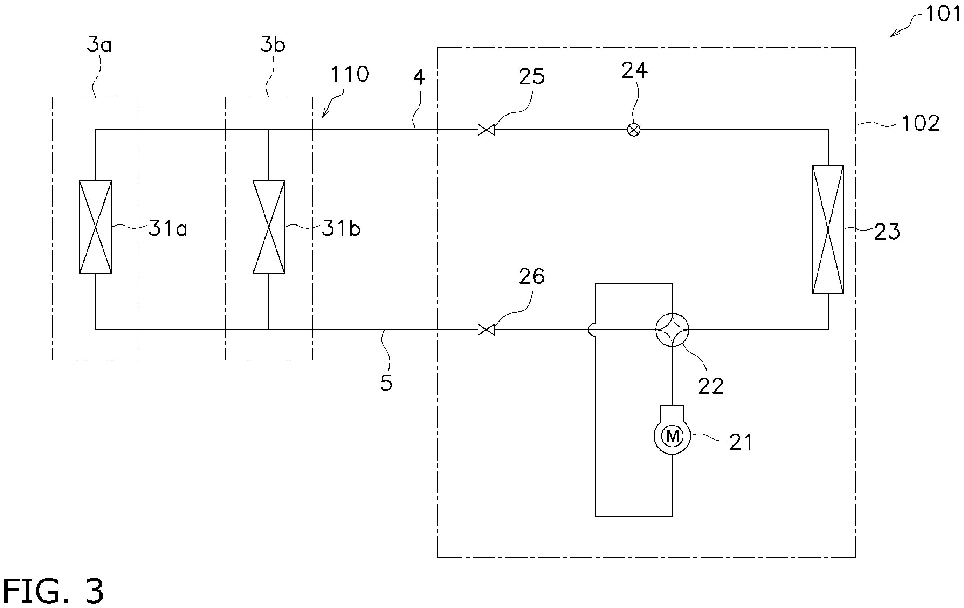

First, as illustrated in FIG. 2, a refrigerant is recovered from a refrigeration cycle apparatus 101 as an existing facility illustrated in FIG. 3 (step S10). The existing refrigeration cycle apparatus 101 in FIG. 3 has a configuration basically similar to that of the refrigeration cycle apparatus 1 manufactured in FIG. 1, but is different from the refrigeration cycle apparatus 1 in FIG. 1 in that R32 as a refrigerant is sealed in a refrigerant circuit 110 of the existing refrigeration cycle apparatus 101 in FIG. 3. In other words, the existing refrigeration cycle apparatus 101 uses an R32 single refrigerant as a working refrigerant. Therefore, in step S10, R32 as the working refrigerant is recovered from the existing refrigeration cycle apparatus 101.

Although a method for recovering the refrigerant is not limited, here, a refrigerant recovering machine including a compressor that sucks the refrigerant is used. The refrigerant recovering machine is operated in a state of being connected to the liquid shutoff valve 25 and the gas shutoff valve 26 to suck the refrigerant from the refrigerant circuit 110 of the existing refrigeration cycle apparatus 101 and recover the refrigerant in a recovering cylinder 131 connected to the refrigerant recovering machine.

Note that the recovering step (S10) may be performed at a factory, but in the present embodiment, the recovering step is performed on site.

Next, a heat source unit 102 constituting the existing refrigeration cycle apparatus 101 is detached from the connection pipes 4 and 5 (step S20). By the detaching step (S20), the heat source unit 102 from which the refrigerant has been recovered is separated from the utilization units 3a and 3b and the connection pipes 4 and 5.

Next, at least one of oil or acid adhering to the connection pipes 4 and 5 of the existing refrigeration cycle apparatus 101 is washed (step S30). By the washing step (S30), it is possible to remove the refrigerating machine oil and the acid adhering to the existing connection pipes 4 and 5. The washing method is not limited, and generally used technology can be adopted.

Next, the heat source unit in which a refrigerant including R1234yf has been sealed is connected to the connection pipes 4 and 5 connected to the utilization units 3a and 3b to generate a refrigerant circuit (step S40). Specifically, the generating step (S40) is performed as follows.

A new heat source unit in which a refrigerant including R1234yf has been sealed is prepared (step S41). The new heat source unit is a unit that is replaced with the heat source unit 102 of the existing refrigeration cycle apparatus 101 and becomes the heat source unit 2 of the refrigeration cycle apparatus 1 to be manufactured. The new heat source unit may use at least a part of the components of the existing heat source unit 102 or a new component.

In some embodiments, the refrigerant including R1234yf may be an R1234yf single refrigerant, or may be a mixed refrigerant of R1234yf and another refrigerant. R1234yf may be a newly produced refrigerant or a recycled refrigerant.

Only the refrigerant including R1234yf may be sealed in the new heat source unit, or the refrigerant including R1234yf and a component other than the refrigerant may be sealed in the new heat source unit. The component other than the refrigerant is, for example, a refrigerating machine oil including an additive. Although the refrigerating machine oil is not limited, for example, oxygenated synthetic oil (ester refrigerating machine oil, ether refrigerating machine oil, and the like), hydrocarbon refrigerating machine oil, or the like can be used. The additive is, for example, an acid scavenger.

In the present embodiment, the new heat source unit in which the newly produced R1234yf single refrigerant has been sealed is used.

Thereafter, the new heat source unit in which the refrigerant including R1234yf has been sealed is connected to the connection pipes 4 and 5 of the existing refrigeration cycle apparatus 101 (step S42). As a result, the refrigerant circuit 10 can be generated by the heat source unit 2 in FIG. 1, which is the new heat source unit in which the R1234yf single refrigerant has been sealed, the utilization units 3a and 3b, and the connection pipes 4 and 5.

Next, the refrigerant circuit is filled with R32 recovered and recycled from the existing facility, and a mixed refrigerant including at least R32 and R1234yf is sealed (step S50). Specifically, the sealing step (S50) is performed as follows.

R32 recovered from the existing facility is recycled (step S51). The existing facility is not limited, but in the present embodiment, the refrigeration cycle apparatus 101 illustrated in FIG. 3 is used. Therefore, here, R32 recovered from the refrigeration cycle apparatus 101 is recycled. The recycling step (S51) includes steps of reducing at least one of the water, the acid, or the oil included in recovered R32 (steps S51a to S51c).

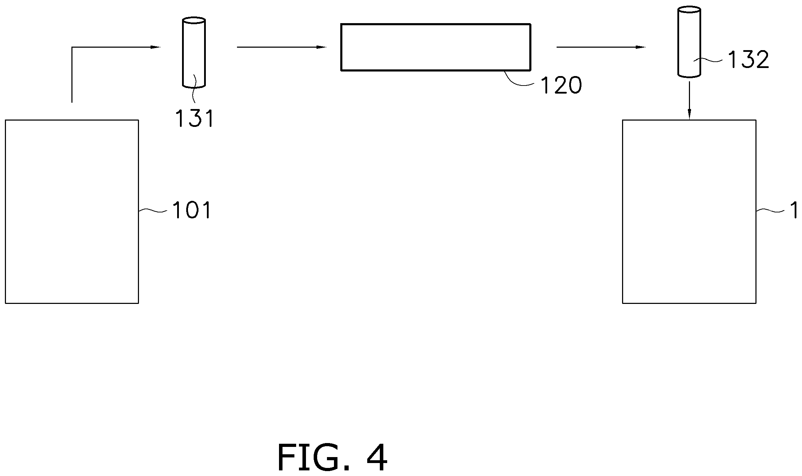

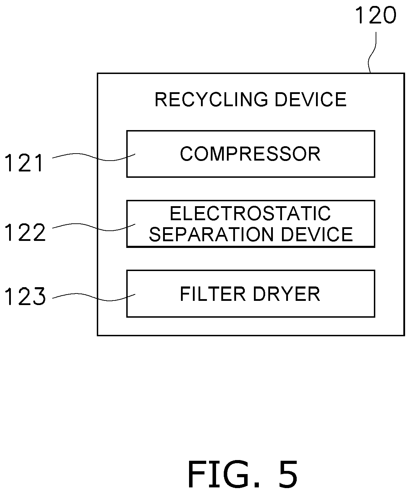

Specifically, as illustrated in FIG. 4, the recovering cylinder 131 and the recycling cylinder 132 filled with R32 recovered from the refrigeration cycle apparatus 101 are connected to a recycling device 120. Then, R32 filled in the recovering cylinder 131 is transferred to the recycling device 120. As illustrated in FIG. 5, the recycling device 120 removes the oil from recovered R32 mainly by a compressor 121 and an electrostatic separation device 122 (step S51a). The water and the acid are removed from recovered R32 by a filter dryer 123 (steps S51b and S51c). As a result, the water, the acid, and the oil included in recovered R32 can be reduced to generate recycled R32. Then, recycled R32 is transferred to the recycling cylinder 132 and the recycling cylinder 132 is filled with R32.

Thereafter, the refrigerant circuit 10 constituted by connecting the heat source unit 2 is filled with recycled R32 (step S52). Here, recycled R32 is filled in the refrigerant pipes constituting the refrigerant circuit 10. As a result, the mixed refrigerant including R1234yf filled in the heat source unit 2 to be the new heat source unit and recycled R32 is sealed in the refrigerant circuit 10.

The mixed refrigerant of the present embodiment includes 65 mass% or more of R1234yf. Specifically, in the refrigerant made of the mixed refrigerant, R1234yf is 65 mass% or more. As described above, the mixed refrigerant including 65 mass% or more of R1234yf is sealed in the refrigerant circuit 10.

In addition, the refrigerating machine oil including the additive is filled (step S53). Step S52 and step S53 may not be performed simultaneously, but are performed simultaneously in the present embodiment. Specifically, in a state where recycled R32 and the refrigerating machine oil including the additive are mixed, the refrigerant circuit 10 constituted by connecting the new heat source unit in which the R1234yf single refrigerant has been sealed is filled with a mixed refrigerant. Note that recycled R32 and the refrigerating machine oil may be filled from the same place or from different places in the refrigerant pipe constituting the refrigerant circuit 10.

Examples of the additive include an acid scavenger, an extreme pressure agent, an antioxidant, an antifoaming agent, an oily agent, a metal inactivating agent such as a copper inactivating agent, an antiwear agent, a compatibilizer, and the like.

As the acid scavenger, an epoxy compound such as phenyl glycidyl ether, alkyl glycidyl ether, alkylene glycol glycidyl ether, cyclohexene oxide, α-olefin oxide, or epoxidized soybean oil, carbodiimide, or the like can be used. Among them, phenyl glycidyl ether, alkyl glycidyl ether, alkylene glycol glycidyl ether, cyclohexene oxide, and α-olefin oxide are preferable from the viewpoint of compatibility. The alkyl group of the alkyl glycidyl ether and the alkylene group of the alkylene glycol glycidyl ether may have a branch. The number of carbon atoms may be 3 or more and 30 or less, more preferably 4 or more and 24 or less, and still more preferably 6 or more and 16 or less. The α-olefin oxide may have a total carbon number of 4 or more and 50 or less, more preferably 4 or more and 24 or less, and still more preferably 6 or more and 16 or less. The acid scavenger may be used singly or in combination of two or more kinds thereof.

As the extreme pressure agent, for example, things including phosphoric acid esters can be used. As the phosphoric acid esters, a phosphoric acid ester, a phosphorous acid ester, an acidic phosphoric acid ester, an acidic phosphorous acid ester, and the like can be used, and things including amine salts of a phosphoric acid ester, a phosphorous acid ester, an acidic phosphoric acid ester, and an acidic phosphorous acid ester can also be used.

As the antioxidant, for example, a phenol-based antioxidant or an amine-based antioxidant can be used. Examples of the phenolic antioxidant include 2,6-di-tert-butyl-4 methylphenol (DBPC), 2,6-di-tert-butyl-4 ethylphenol, 2,2'-methylenebis (4-methyl-6-tert-butylphenol), 2,4-dimethyl-6 tert-butylphenol, 2,6-di-tert-butylphenol, di-tert-butyl-p-cresol, bisphenol A, and the like. Examples of the amine-based antioxidant include N,N'diisopropyl-p-phenylenediamine, N,N'-di-sec-butyl-p-phenylenediamine, phenyl-α-naphthylamine, N,N'-di-phenyl-p-phenylenediamine, N,N-di (2-naphthyl)-p-phenylenediamine, and the like. As the antioxidant, an oxygen scavenger that traps oxygen can also be used.

As the antifoaming agent, for example, a silicon compound can be used.

As the oily agent, for example, higher alcohols, fatty acids, and the like can be used.

As the metal inactivating agent such as the copper inactivating agent, benzotriazole, a derivative thereof, or the like can be used.

As the antiwear agent, zinc dithiophosphate or the like can be used.

The compatibilizer is not limited, and can be appropriately selected from generally used compatibilizers, and a kind of compatibilizer may be used alone, or two or more kinds of compatibilizers may be used. Examples of the compatibilizer include polyoxyalkylene glycol ether, amide, nitrile, ketone, chlorocarbon, ester, lactone, aryl ether, fluoroether, 1,1,1-trifluoroalkane, and the like. As the compatibilizer, a polyoxyalkylene glycol ether is particularly preferable.

The mixing is performed such that a blending ratio of the additive in the entire fluid (here, the refrigerant and the refrigerating machine oil) sealed in the refrigerant circuit 10 is preferably 5 mass% or less, and more preferably 3 mass% or less.

The sealing step (S50) is performed on site. Specifically, in the generating step (S40), the new heat source unit in which the refrigerant including R1234yf has been sealed is shipped and the refrigerant circuit 10 is generated on site, and in the sealing step (S50), recovered and recycled R32 and the refrigerating machine oil are filled. When recycled R32 is filled more than the appropriate amount, an error may be displayed.

Next, a composition of the mixed refrigerant in the refrigerant circuit 10 is examined (step S54). In the examining step (S54), the composition of the mixed refrigerant is examined using a composition analyzer or the like. When the composition of the mixed refrigerant is appropriate in the examining step (S54), it is determined that use as the refrigeration cycle apparatus 1 is possible. On the other hand, when the composition of the mixed refrigerant is not appropriate in the examining step (S54), the composition is adjusted.

The refrigeration cycle apparatus 1 in FIG. 1 can be manufactured by performing the above steps (S10 to S50).

### (1-3) Features

(1-3-1)
The method for manufacturing the refrigeration cycle apparatus 1 according to the present embodiment is a method for manufacturing a refrigeration cycle apparatus including the heat source unit 2, the utilization units 3a and 3b, and the connection pipes 4 and 5. The connection pipes 4 and 5 connect the heat source unit and the utilization units. The method for manufacturing the refrigeration cycle apparatus 101 includes the generating step (S40) and the sealing step (S50). In the generating step (S40), the heat source unit in which the refrigerant including R1234yf has been sealed is connected to the connection pipes 4 and 5 connected to the utilization units 3a and 3b to generate the refrigerant circuit 10. In the sealing step (S50), the refrigerant circuit 10 is filled with R32 recovered and recycled from the existing facility, and a mixed refrigerant including at least R32 and R1234yf is sealed.

According to the method for manufacturing the refrigeration cycle apparatus 1 according to the present embodiment, the refrigerant circuit 10 mixes the refrigerant including R1234yf sealed in the heat source unit 2 and recycled R32 to generate a mixed refrigerant having a low GWP. Therefore, the recycled refrigerant can be used for the refrigeration cycle apparatus 1 that contributes to reduction in (prevention of) global warming.

Note that the GWP of the mixed refrigerant sealed in the refrigerant circuit 10 of the manufactured refrigeration cycle apparatus 1 may be higher than that of R32, but is lower than that of R32 in the present embodiment. Therefore, it is possible to manufacture the refrigeration cycle apparatus 1 that can contribute to reduction in global warming more than existing refrigeration cycle apparatus 101 in FIG. 3.

In the present embodiment, the step of recovering the refrigerant from the existing refrigeration cycle apparatus 101 (S10) and the step of recycling R32 recovered from the existing facility (S51) are performed on site. Therefore, it is possible to suppress a risk that different kinds of refrigerants are mixed and recycling processing becomes difficult, as compared with a case where the refrigerant is recovered from a plurality of devices and the recycling processing is performed in a factory.

(1-3-2)
As in the method for manufacturing the refrigeration cycle apparatus 1 according to the present embodiment, the heat source unit in which the R1234yf single refrigerant has been sealed may be used in the generating step (S40).

In this case, by mixing R1234yf filled in the new heat source unit and recycled R32, the refrigeration cycle apparatus 1 including the refrigerant circuit 10 in which a mixed refrigerant with a low GWP such as R454C or R454B has been sealed can be manufactured.

In particular, it is preferable to generate R454C or R454B as the mixed refrigerant.

(1-3-3)
In the method for manufacturing the refrigeration cycle apparatus 1 according to the present embodiment, preferably, the mixed refrigerant including 65 mass% or more of R1234yf is sealed in the refrigerant circuit 10 in the sealing step (S50).

In this case, the refrigeration cycle apparatus 1 including the refrigerant circuit 10 in which a mixed refrigerant having a lower GWP has been sealed can be manufactured.

(1-3-4)
In the present embodiment, in the sealing step (S50), the refrigerant circuit 10 is filled with R32 recovered and recycled from the existing refrigeration cycle apparatus 101, and a mixed refrigerant including at least R32 and R1234yf is sealed.

As such, the refrigerant including R32 is recovered from the refrigeration cycle apparatus 101 as the existing facility. Since R32 is reused in the sealing step (S50), the release of R32 to the atmosphere can be reduced.

(1-3-5)
In the method for manufacturing the refrigeration cycle apparatus 1 according to the present embodiment, preferably, the recycling step (S51) includes the steps (S51a to S51c) of reducing at least one of water, acid, or oil included in recovered R32.

As a result, since R32 in which at least one of the water, the acid, or the oil has been reduced is recycled, the quality of the mixed refrigerant generated by mixing R32 with R1234yf sealed in the heat source unit 2 can be improved.

In particular, when the recycling step (S51) includes the step (S51a) of reducing the water included in recovered R32, R32 from which the water has been removed is recycled, so that the oxidation and decomposition of R1234yf to be mixed can be suppressed in the step (S52) of filling the recycled refrigerant.

R32, R1234yf, and mixed gas thereof have combustibility. When the recycling step (S51) is performed on site, it is assumed that recycling processing is performed on a small-scale refrigerant as compared with a case where the recycling step is performed in a factory. In this case, it is possible to simplify the explosion prevention measures for a recycling facility used on site.

(1-3-6)
In the method for manufacturing the refrigeration cycle apparatus 1 according to the present embodiment, preferably, the sealing step (S50) includes the step (S53) of further filling the acid scavenger.

As a result, in the step of mixing R1234yf and recycled R32, even if R1234yf is decomposed to generate an acid, the acid scavenger can trap the acid. Therefore, an increase in the acid concentration can be suppressed.

(1-3-7)
In the method for manufacturing the refrigeration cycle apparatus 1 according to the present embodiment, preferably, the sealing step (S55) further includes the step of examining the composition of the generated mixed refrigerant (S54).

By the examining step (S54), it is possible to examine whether or not the mixed refrigerant has an appropriate composition. Therefore, the refrigerant circuit 10 of the refrigeration cycle apparatus 1 can be filled with the mixed refrigerant having the appropriate composition.

(1-3-8)
In the method for manufacturing refrigeration cycle apparatus 1 according to the present embodiment, preferably, the step (S30) of washing at least one of oil or acid adhering to the connection pipes 4 and 5 of the existing refrigeration cycle apparatus 101, which is performed prior to the generating step (S40), is performed.

The oil and the acid adhering to the connection pipes 4 and 5 can be reduced by the washing step (S30). Therefore, when the generating step (S40) and the sealing step (S50) are performed and the mixed refrigerant is used as the working refrigerant, mixing of impurities into the mixed refrigerant can be suppressed.

### (1-4) Modifications of first embodiment

### (1-4-1) Modification 1

In the above embodiment, in the generating step (S40), the new heat source unit in which the R1234yf single refrigerant has been sealed is used, but the new heat source unit is not limited thereto as long as it includes R1234yf. In the present modification, in the generating step (S40), a new heat source unit in which a refrigerant consisting of R1234yf and carbon dioxide has been sealed is used.

In this case, it is possible to manufacture the refrigeration cycle apparatus 1 including the refrigerant circuit in which the mixed refrigerant with a low GWP such as R455A has been sealed by mixing recycled R32 with R1234yf and carbon dioxide filled in the new heat source unit.

### (1-4-2) Modification 2

In the above embodiment and Modification 1, R32 is recovered from the refrigeration cycle apparatus 101 which is the existing facility including the refrigerant circuit 110 in which the R32 single refrigerant has been sealed, the heat source unit is replaced with a new heat source unit in which the refrigerant including R1234yf has been sealed, and recovered R32 is recycled and additionally filled, so that the existing refrigeration cycle apparatus 101 is transformed into the refrigeration cycle apparatus 1 using the mixed refrigerant including R1234yf and R32 as the working refrigerant.

However, the existing facility is not limited to the refrigeration cycle apparatus in which the R32 single refrigerant has been sealed. In a case of the existing facility in which a mixed refrigerant including R32 has been sealed, the mixed refrigerant may be recovered and R32 may be recycled. When the existing refrigeration cycle apparatus does not include R32, R32 is separately recovered from the existing facility that does not use a part of the refrigeration cycle apparatus 1 to be manufactured (different from the refrigeration cycle apparatus 101 in FIG. 3), and the existing refrigeration cycle apparatus not including R32 is transformed into the refrigeration cycle apparatus 1 using the mixed refrigerant including R1234yf and R32 as the working refrigerant.

The refrigeration cycle apparatus is transformed into the refrigeration cycle apparatus 1 using the connection pipes 4 and 5 and the utilization units 3a and 3b of the existing refrigeration cycle apparatus 101, but the present disclosure is not limited thereto. In the generating step (S40), at least one of the utilization unit or the connection pipe connecting the new heat source unit in which the refrigerant including R1234yf has been sealed may be newly installed.

### (1-4-3) Modification 3

In the above embodiment and Modifications 1 and 2, the newly produced R1234yf refrigerant is used, but the present disclosure is not limited thereto. In the present modification, the recycled R1234yf refrigerant is used.

### (1-4-4) Modification 4

In the above embodiment, the sealing step (S50) mixes at least the refrigerant including R1234yf sealed in the new heat source unit, recycled R32, and the refrigerating machine oil including the additive, but the present disclosure is not limited thereto. In the present modification, in the generating step (S40), the new heat source unit in which the refrigerant including R1234yf and the refrigerating machine oil including the additive have been sealed is connected to the connection pipes 4 and 5 connected to the utilization units 3a and 3b to generate the refrigerant circuit 10.

Specifically, the new heat source unit in which the refrigerant including R1234yf and the refrigerating machine oil have been sealed is prepared (step S41). Thereafter, the new heat source unit in which the refrigerant including R1234yf and the refrigerating machine oil have been sealed is connected to the connection pipes 4 and 5 of the existing refrigeration cycle apparatus 101 (step S42).

### (1-4-5) Modification 5

In the above embodiment, the step (S30) of washing at least one of the oil or the acid adhering to the connection pipes 4 and 5 is performed after the step (S20) of detaching the heat source unit, but the present disclosure is not limited thereto. The washing step (S30) is performed prior to the step (S41) of connecting the new heat source unit to the connection pipes 4 and 5. In the present modification, the washing step (S30) is performed in the step (S10) of recovering the refrigerant. In other words, the step (S10) of recovering the refrigerant from the existing device further includes the step (S30) of washing at least one of the oil or the acid adhering to the connection pipe of the existing refrigeration cycle apparatus.

### (1-4-6) Modification 6

In the above embodiment, the refrigerant circuit 10 in which the refrigerant and the refrigerating machine oil have been sealed has been described as an example, but the refrigerating machine oil may be omitted. In this case, only the components of the refrigerating machine oil may be omitted, and at least a part of the additives described above may be sealed in the refrigerant circuit 10.

### (1-4-7) Modification 7

In the above embodiment, the method for manufacturing the refrigeration cycle apparatus 1 including the plurality of utilization units 3a and 3b has been described. However, the number of utilization units may be one or three or more.

### (1-4-8) Modification 8

In the above embodiment, the method for manufacturing the refrigeration cycle apparatus 1 capable of cooling and heating has been described, but the present disclosure is not limited thereto. For example, the method for manufacturing the refrigeration cycle apparatus 1 of the present disclosure can also be applied to a method for manufacturing a refrigeration cycle apparatus dedicated to cooling.

### (1-4-9) Modification 9

In the above embodiment, the refrigeration cycle apparatus has been described as an example of the existing facility for recovering R32, but the present disclosure is not limited thereto. From any existing facility including R32, R32 is recovered.

### (2) Second embodiment

### (2-1) Heat source unit and refrigeration cycle apparatus

A heat source unit manufactured by a method for manufacturing a heat source unit according to a second embodiment is similar to a heat source unit 2 according to the first embodiment illustrated in FIG. 1. In addition, a refrigeration cycle apparatus manufactured by a method for manufacturing a refrigeration cycle apparatus according to the second embodiment is similar to a refrigeration cycle apparatus 1 according to the first embodiment illustrated in FIG. 1.

### (2-2) Method for manufacturing heat source unit

A method for manufacturing the heat source unit 2 illustrated in FIG. 1 will be described with reference to FIGS. 1 and 3 to 6.

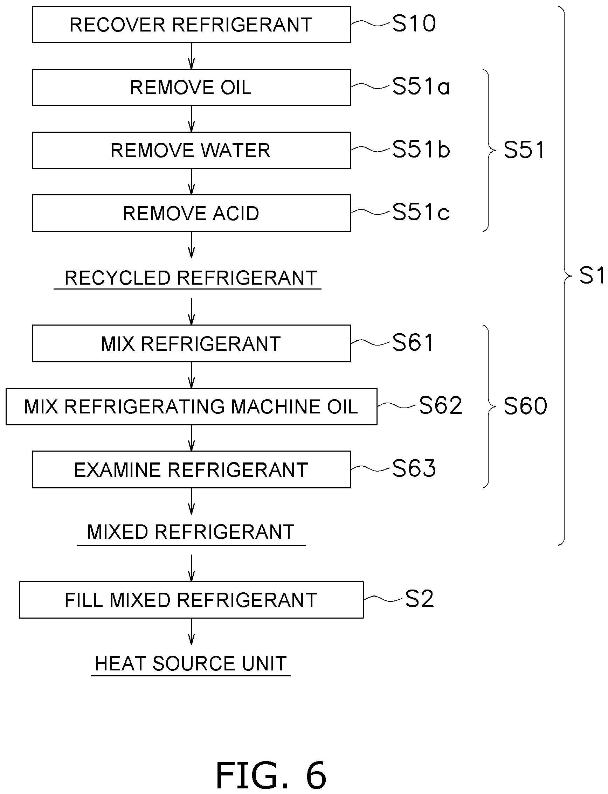

First, as illustrated in FIG. 6, a first step (S1) of mixing R1234yf with R32 recovered and recycled from an existing facility to generate a mixed refrigerant including at least R32 and R1234yf is performed. Specifically, the first step (S1) is performed as follows.

First, R32 is recovered from a refrigeration cycle apparatus as an existing facility (step S10). Similarly to the first embodiment, the recovering step (S10) recovers R32 as a working refrigerant from an existing refrigeration cycle apparatus 101 illustrated in FIG. 3.

Thereafter, at least one of water, acid, or oil included in recovered R32 is reduced (step S51). In the step (S51), similarly to the first embodiment, a step (S51a) of removing oil from recovered R32, a step (S51b) of removing water from recovered R32, and a step (S51c) of removing acid from recovered R32 are performed using a recycling device 120 of FIG. 4.

By performing the recovering step (S10) and the recycling step (S51), it is possible to generate R32 recovered and recycled from the existing facility.

Next, at least recycled R32 and R1234yf are mixed (step S60). In the mixing step (S60), only recycled R32 and R1234yf may be mixed as the refrigerant, or recycled R32, R1234yf, and other refrigerant components may be mixed. In addition, R1234yf may be a newly produced refrigerant or a recycled refrigerant.

In the mixing step (S60), recycled R32 and R1234yf are mixed as refrigerant components (step S61).

In the mixing step (S60), refrigerating machine oil may be further mixed. In the present embodiment, the refrigerating machine oil including the additive is further mixed (step S62). The refrigerating machine oil and the additive are similar to those in the first embodiment.

The step (S61) of mixing recycled R32 and R1234yf and the step (S62) of mixing the refrigerating machine oil may not be performed simultaneously, but are performed simultaneously in the present embodiment. Specifically, in the mixing step (S60), at least recycled R32, R1234yf, and the refrigerating machine oil including the additive are mixed. Here, since the additive includes an acid scavenger, the mixing step (S60) includes a step of further mixing the acid scavenger.

By performing the mixing step (S60), a mixed refrigerant is generated. The mixed refrigerant of the present embodiment includes 65 mass% or more of R1234yf. Specifically, R1234yf in the refrigerant including the refrigerant components is 65 mass% or more. Specifically, R454C, R455A, or R454B is generated as the mixed refrigerant.

Note that the mixing step (S60) may be performed at a factory, but is performed on site in the present embodiment.

Thereafter, a composition of the generated mixed refrigerant is examined (S63). The examining step (S63) is similar to the examining step (S54) of the first embodiment. When the composition of the mixed refrigerant is appropriate in the examining step (S63), it is determined that the heat source unit 2 can be filled with the mixed refrigerant. On the other hand, when the composition of the mixed refrigerant is not appropriate in the examining step (S63), the composition is adjusted.

Next, a second step (S2) of filling the heat source unit with the mixed refrigerant is performed. Specifically, the second step (S2) is performed as follows.

A heat source unit in which a refrigerant is not sealed is prepared. The present embodiment uses a heat source unit 102 in which the refrigerant has been recovered from the existing refrigeration cycle apparatus illustrated in FIG. 3. Then, the heat source unit 102 is filled with the mixed refrigerant generated in the first step (S1). As a result, the heat source unit 2 illustrated in FIG. 1, which has been filled with the mixed refrigerant including at least R32 and R1234yf, can be manufactured.

### (2-3) Method for manufacturing refrigeration cycle apparatus

A method for manufacturing the refrigeration cycle apparatus 1 illustrated in FIG. 1 will be described with reference to FIGS. 1 and 3 to 7. The method for manufacturing the refrigeration cycle apparatus 1 according to the present embodiment is a method for manufacturing the refrigeration cycle apparatus 1 including the heat source unit 2 manufactured by the method for manufacturing the heat source unit 2 according to (2-2) described above, utilization units 3a and 3b, and connection pipes 4 and 5 connecting the heat source unit 2 and the utilization units 3a and 3b.

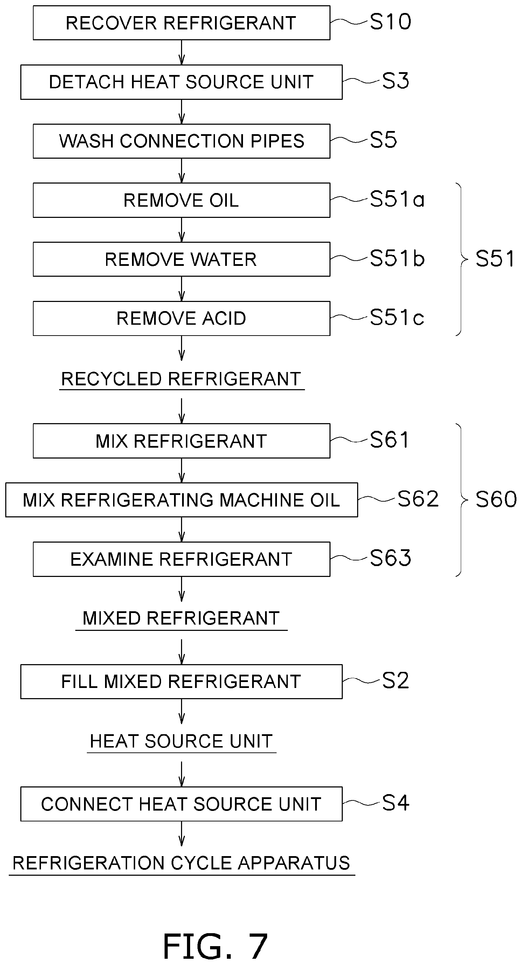

First, as illustrated in FIG. 7, a refrigerant is recovered from the existing refrigeration cycle apparatus 101 illustrated in FIG. 3 (step S10).

Next, a third step (S3) of detaching the first heat source unit 102 constituting the existing refrigeration cycle apparatus 101 from the connection pipes 4 and 5 is performed. By the third step (S3), the heat source unit 102 from which the refrigerant has been recovered is separated from the utilization units 3a and 3b and the connection pipes 4 and 5.

Next, a fifth step (S5) of washing at least one of the oil or the acid adhering to the connection pipes 4 and 5 of the existing refrigeration cycle apparatus 101, which is performed prior to a fourth step (S4), is performed. The fifth step (S5) is similar to the step (S30) of washing the connection pipes 4 and 5 according to the first embodiment.

Next, the recycling step (S51), the mixing step (S60), and the second step (S2) are performed. As a result, the second heat source unit 2 can be manufactured by the method for manufacturing the heat source unit 2 in (2-2).

Next, the fourth step (S4) of connecting the manufactured second heat source unit 2 to the connection pipes 4 and 5 is performed. The fourth step (S4) is similar to the step (S42) of connecting the heat source unit to the connection pipes 4 and 5 according to the first embodiment.

The refrigeration cycle apparatus 1 illustrated in FIG. 1 can be manufactured by performing the above steps (S1 to S5).

### (2-4) Features

(2-4-1)
The method for manufacturing the heat source unit 2 according to the present embodiment includes the first step (S1) and the second step (S2). The heat source unit constitutes the refrigeration cycle apparatus. The first step (S1) mixes R32 recovered and recycled from the existing facility with R1234yf to generate the mixed refrigerant including at least R32 and R1234yf. The second step (S2) fills the heat source unit 2 with the mixed refrigerant.

According to the method for manufacturing the heat source unit 2 according to the present embodiment, since recycled R32 and R1234yf having a low GWP are mixed in the first step (S1), a mixed refrigerant having a low GWP can be generated. Therefore, by performing the second step (S2), the heat source unit 2 can be filled with the mixed refrigerant having a low GWP. Therefore, the recycled refrigerant can be used for the heat source unit 2 that contributes to reduction in (prevention of) global warming.

Note that the GWP of the mixed refrigerant filled in the manufactured heat source unit 2 may be higher than that of R32, but is lower than that of R32 in the present embodiment. Therefore, the heat source unit 2 that can contribute to reduction in global warming can be manufactured.

In the present embodiment, since R32 is reused in the first step (S1), the release of R32 to the atmosphere can be reduced.

(2-4-2)
In the method for manufacturing the heat source unit 2 according to the present embodiment, preferably, the first step (S1) includes the recycling step (S51) and the mixing step (S60). The recycling step (S51) recycles R32 recovered from the existing facility. The mixing step (S60) mixes at least recycled R32 and R1234yf.

In the present embodiment, the mixing step (S60) is performed on site. R32, R1234yf, and mixed gas thereof have combustibility. The recycling step (S51) includes one or more steps (S51a, S51b, S51c, or any combination thereof) of reducing at least one of the water, the acid, or the oil included in recovered R32.

Here, by performing at least one of the step (S51a) of reducing the water, the step (S51b) of reducing the acid, or the step (S51c) of reducing the oil, R32 in which at least one of the water, the acid, or the oil has been reduced is recycled, so that the quality of the mixed refrigerant generated by mixing R32 with R1234yf can be improved.

In particular, it is preferable that the recycling step (S51) has the step (S51a) of reducing the water. Since R32 from which the water has been removed is recycled by the step (S51a) of reducing the water, oxidation and decomposition of R1234yf to be mixed in the mixing step (S60) can be suppressed.

In the present embodiment, a small-scale mixed refrigerant is assumed to be manufactured in order to perform the mixing step (S60) on site. Therefore, it is possible to simplify the explosion prevention measures for a manufacturing facility used when the mixed refrigerant is manufactured on site.

(2-4-3)
In the method for manufacturing the heat source unit 2 according to the present embodiment, preferably, the mixing step (S60) includes the step (S53) of further mixing the acid scavenger.

Here, in the mixing step (S60), even if R1234yf is decomposed to generate an acid, the acid scavenger can trap the acid. Therefore, an increase in the acid concentration can be suppressed.

(2-4-4)
In the method for manufacturing the heat source unit 2 according to the present embodiment, the first step (S1) further includes the examining step (S54) of examining the composition of the mixed refrigerant generated in the mixing step (S60).

Here, by the examining step (S54), it is possible to examine whether or not the mixed refrigerant has an appropriate composition. Therefore, the heat source unit 2 can be filled with the mixed refrigerant having the appropriate composition.

(2-4-5)
The method for manufacturing the heat source unit 2 according to the present embodiment includes 65 mass% or more of R1234yf in the first step (S1).

Here, in the first step (S1), a mixed refrigerant having a lower GWP can be generated. Therefore, in the second step (S2), the heat source unit can be filled with the mixed refrigerant having a low GWP, which contributes to reduction in global warming.

(2-4-6)
In the method for manufacturing the heat source unit 2 according to the present embodiment, preferably, in the first step (S1), R454C, R455A, or R454B is generated as the mixed refrigerant.

Here, the heat source unit 2 can be filled with a mixed refrigerant having a very low GWP. Therefore, the heat source unit 2 contributing to reduction in global warming can be realized using recycled R32.

(2-4-7)
The method for manufacturing the refrigeration cycle apparatus 1 according to the present embodiment includes the third step (S3) and the fourth step (S4), and the refrigeration cycle apparatus 1 includes the heat source unit 2, the utilization units 3a and 3b, and the connection pipes 4 and 5. The heat source unit 2 is manufactured by the method for manufacturing the heat source unit 2. The connection pipes 4 and 5 connect the heat source unit 2 and the utilization units 3a and 3b. The first step (S1) includes the recovering step (S10) of recovering the refrigerant from the existing refrigeration cycle apparatus 101. The third step (S3) detaches the first heat source unit 102 constituting the existing refrigeration cycle apparatus 101 from the connection pipes 4 and 5. The fourth step (S4) connects the second heat source unit 2 manufactured by the method for manufacturing the heat source unit 2 to the connection pipes 4 and 5.

Here, the refrigerant is recovered from the existing refrigeration cycle apparatus 101, and the existing first heat source unit 102 is detached from the existing connection pipes 4 and 5 and replaced with the second heat source unit 2 filled with the mixed refrigerant including recycled R32. Therefore, it is possible to manufacture the refrigeration cycle apparatus 1 including the heat source unit 2 contributing to reduction in global warming by using the recycled refrigerant.

In the present embodiment, the connection pipes 4 and 5 of the existing refrigeration cycle apparatus 101 can be used. As described above, the installation method for connecting the heat source unit 2 manufactured by the method for manufacturing the heat source unit 2 to the existing connection pipes 4 and 5 can contribute to suppression of carbon dioxide emission.

(2-4-8)
The method for manufacturing the refrigeration cycle apparatus 1 according to the present embodiment preferably further includes the fifth step (S5) of washing at least one of oil or acid adhering to the connection pipes 4 and 5 of the existing refrigeration cycle apparatus 101, which is performed prior to the fourth step (S4).

Here, it is possible to reduce the oil and the acid adhering to the connection pipes 4 and 5 by the fifth step (S5). Therefore, when the second heat source unit 2 is connected and the mixed refrigerant is used as the working refrigerant, mixing of impurities in the mixed refrigerant can be suppressed.

### (2-5) Modifications of second embodiment

### (2-5-1) Modification 1

In the above embodiment, R32 is recovered from the refrigeration cycle apparatus 101 which is the existing facility including the refrigerant circuit 110 in which the R32 single refrigerant has been sealed, the heat source unit 2 filled with the mixed refrigerant of R454C, R455A, or R454B is manufactured, and the refrigeration cycle apparatus is transformed into the refrigeration cycle apparatus 1 using the mixed refrigerant as the working refrigerant.

However, the existing facility is not limited to the refrigeration cycle apparatus in which the R32 single refrigerant has been sealed. In a case of the existing facility in which a mixed refrigerant including R32 has been sealed, the mixed refrigerant may be recovered and R32 may be recycled. When the existing refrigeration cycle apparatus does not include R32, R32 may be separately recovered from the existing facility different from the refrigeration cycle apparatus 1 to be manufactured, and the existing refrigeration cycle apparatus that does not include R32 may be transformed into the refrigeration cycle apparatus 1 using the mixed refrigerant including recycled R32 as the working refrigerant.

Specifically, in the method for manufacturing the refrigeration cycle apparatus 1 according to the present modification, in the recovering step (S10) of the first step (S1), the working refrigerant is recovered from the existing refrigeration cycle apparatus 101 that uses R410A as the working refrigerant. In the mixing step (S60) of the first step (S1), R454B consisting of R32 and R1234yf is generated. In the second step (S2), the heat source unit 2 is filled with R454B. In the fourth step (S4), the second heat source unit 2 in which R454B has been sealed is connected to the connection pipes 4 and 5. As a result, it is possible to manufacture the refrigeration cycle apparatus 1 including the refrigerant circuit 10 in which R454B has been sealed.

As described above, in the present modification, a mixed refrigerant having a lower GWP than the existing working refrigerant can be used. Therefore, it is possible to manufacture a refrigeration cycle apparatus including a heat source unit that contributes to reduction in global warming.

### (2-5-2) Modification 2

Although the existing refrigeration cycle apparatus 101 using the R32 single refrigerant in the above embodiment and the R410A single refrigerant in Modification 1 has been described as an example, the present disclosure is not limited thereto.

In the method for manufacturing the refrigeration cycle apparatus 1 according to the present modification, in the recovering step (S10), the working refrigerant is recovered from the existing refrigeration cycle apparatus 101 that uses R22, R404A, or R407C as the working refrigerant. In the mixing step (S60) of the first step (S1), R454C consisting of R32 and R1234yf, or R455A consisting of R32, R1234yf, and carbon dioxide is generated. In the second step (S2), the heat source unit 2 is filled with R454C or R455A. In the fourth step (S4), the second heat source unit 2 in which R454C or R455A has been sealed is connected to the connection pipes 4 and 5. As a result, it is possible to manufacture the refrigeration cycle apparatus 1 including the refrigerant circuit 10 in which R454C or R455A has been sealed.

As described above, in the present modification, a mixed refrigerant having a lower GWP than the existing working refrigerant can be used. Therefore, it is possible to manufacture a refrigeration cycle apparatus including a heat source unit that contributes to reduction in global warming.

### (2-5-3) Modification 3

In the above embodiment, the refrigeration cycle apparatus is transformed into the refrigeration cycle apparatus 1 using the connection pipes 4 and 5 of the existing refrigeration cycle apparatus 101, but the present disclosure is not limited thereto. The newly installed utilization units may be connected to the connection pipes 4 and 5 of the existing refrigeration cycle apparatus 101, while the manufactured second heat source unit 2 is connected to the connection pipes 4 and 5 .

### (2-5-4) Modification 4

In the above embodiment and Modifications 1 and 2, the newly produced R1234yf refrigerant is used, but the present disclosure is not limited thereto. In the present modification, the recycled R1234yf refrigerant is used.

### (2-5-5) Modification 5

In the above embodiment, in the first step (S1), at least recycled R32, R1234yf, and the refrigerating machine oil including the additive are mixed, but the present disclosure is not limited thereto. In the present modification, in the first step (S1), recycled R32 and R1234yf are mixed to generate a mixed refrigerant, and in the second step (S2), the heat source unit is filled with the mixed refrigerant and the refrigerating machine oil including the additive.

### (2-5-6) Modification 6

In the above embodiment, the fifth step (S5) of washing at least one of the oil or the acid adhering to the connection pipes 4 and 5 is performed after the third step (S3) of detaching the heat source unit 2, but the present disclosure is not limited thereto. The fifth step (S5) is performed prior to the fourth step (S4) of connecting the manufactured heat source unit 2 to the connection pipes 4 and 5. In the present modification, the fifth step (S5) is performed in the step (S10) of recovering the refrigerant. In other words, the step (S10) of recovering the refrigerant from the existing device further includes the step (S30) of washing at least one of the oil or the acid adhering to the connection pipe of the existing refrigeration cycle apparatus.

### (2-5-7) Modification 7

In the above embodiment, the refrigerant circuit 10 in which the refrigerant and the refrigerating machine oil have been sealed has been described as an example, but the refrigerating machine oil may be omitted. In this case, only the components of the refrigerating machine oil may be omitted, and at least a part of the additives described above may be sealed in the refrigerant circuit 10.

### (2-5-8) Modification 8

In the above embodiment, the method for manufacturing the refrigeration cycle apparatus 1 including the plurality of utilization units 3a and 3b has been described. However, the number of utilization units may be one or three or more.

### (2-5-9) Modification 9

In the above embodiment, the method for manufacturing the refrigeration cycle apparatus 1 capable of cooling and heating has been described, but the present disclosure is not limited thereto. For example, the method for manufacturing the refrigeration cycle apparatus 1 of the present disclosure can also be applied to a method for manufacturing a refrigeration cycle apparatus dedicated to cooling.

### (2-5-10) Modification 10

In the above embodiment, the refrigeration cycle apparatus has been described as an example of the existing facility where R32 is recovered, but the present disclosure is not limited thereto. From any existing facility including R32, R32 is recovered.

Although the embodiments of the present disclosure have been described above, it will be understood that various changes in form and details can be made without departing from the spirit and scope of the present disclosure described in claims.

### REFERENCE SIGNS LIST

1: refrigeration cycle apparatus
2: heat source unit
3a, 3b: utilization unit
4, 5: liquid connection pipe
10: refrigerant circuit
31: indoor heat exchanger
31a: indoor heat exchanger
31b: indoor heat exchanger
34: outdoor heat exchanger
101: refrigeration cycle apparatus

### CITATION LIST

### PATENT LITERATURE

Patent Literature 1: International Publication No.2020/003509

## Claims

1. A method for manufacturing a heat source unit (2) constituting a refrigeration cycle apparatus (1), the method comprising:
a first step (S1) of mixing R32 recovered and recycled from an existing facility (101) and R1234yf and generating a mixed refrigerant including at least R32 and R1234yf; and
a second step (S2) of filling the heat source unit with the mixed refrigerant.

2. The method for manufacturing a heat source unit according to claim 1, wherein
the first step includes
a recycling step (S51) of recycling the R32 recovered from the existing facility, and
a mixing step (S60) of mixing at least the recycled R32 and R1234yf, and
the recycling step includes a step (S51a, S51b, S51c) of reducing at least one of water, acid, or oil included in the recovered R32.

3. The method for manufacturing a heat source unit according to claim 2, wherein
the mixing step includes a step (S62) of further mixing an acid scavenger.

4. The method for manufacturing a heat source unit according to claim 2 or 3, wherein
the first step further includes an examining step (S63) of examining a composition of the mixed refrigerant generated in the mixing step.

5. The method for manufacturing a heat source unit according to any one of claims 1 to 4, wherein
the first step generates the mixed refrigerant including 65 mass% or more of R1234yf.

6. The method for manufacturing a heat source unit according to claim 5, wherein
the first step generates R454C, R455A, or R454B as the mixed refrigerant.

7. A method for manufacturing a refrigeration cycle apparatus, the refrigeration cycle apparatus including the heat source unit manufactured by the method according to any one of claims 1 to 6, a utilization unit (3a), and a connection pipe (4, 5) connecting the heat source unit and the utilization unit, wherein
the first step includes a recovering step (S10) of recovering a refrigerant from an existing refrigeration cycle apparatus,
the method for manufacturing a refrigeration cycle apparatus comprising:
a third step (S3) of detaching a first heat source unit constituting the existing refrigeration cycle apparatus from the connection pipe; and
a fourth step (S4) of connecting, to the connection pipe, a second heat source unit manufactured by the method for manufacturing a heat source unit according to any one of claims 1 to 6.

8. The method for manufacturing a refrigeration cycle apparatus according to claim 7, further comprising:
a fifth step (S5) of washing at least one of oil or acid adhering to the connection pipe of the existing refrigeration cycle apparatus, the fifth step being performed prior to the fourth step.

9. The method for manufacturing a refrigeration cycle apparatus according to claim 7 or 8, wherein
the recovering step recovers, from the existing refrigeration cycle apparatus using R410A or R32 as a working refrigerant, the working refrigerant, and
the fourth step connects the second heat source unit in which R454B has been sealed to the connection pipe.

10. The method for manufacturing a refrigeration cycle apparatus according to claim 8, wherein
the recovering step recovers, from the existing refrigeration cycle apparatus using R22, R404A, or R407C as a working refrigerant, the working refrigerant, and
the fourth step connects the second heat source unit in which R454C or R455A has been sealed to the connection pipe.

11. A method for manufacturing a refrigeration cycle apparatus (1) including a heat source unit (2), a utilization unit (3a), and a connection pipe (4, 5) connecting the heat source unit and the utilization unit, the method comprising:
a step (S40) of generating a refrigerant circuit (10) by connecting the heat source unit in which a refrigerant including R1234yf has been sealed to the connection pipe connected to the utilization unit; and
a step (S50) of sealing a mixed refrigerant including at least R32 and R1234yf by filling the refrigerant circuit with R32 recovered and recycled from an existing facility.

12. The method for manufacturing a refrigeration cycle apparatus according to claim 11, wherein
the generating step uses the heat source unit in which an R1234yf single refrigerant has been sealed.

13. The method according to claim 12, wherein
the generating step uses the heat source unit in which a refrigerant consisting of R1234yf and carbon dioxide has been sealed.
